Europäisches Patentamt

European Patent Office

Office européen des brevets

(11) Publication number: **0 425 452 A1**

# EUROPEAN PATENT APPLICATION

(21) Application number: 90830464.5

(22) Date of filing: 16.10.90

(51) Int. Cl.⁵: **B60D 1/00**, B62D 13/00

(30) Priority: 17.10.89 IT 3441689 U

(43) Date of publication of application:
02.05.91 Bulletin 91/18

(84) Designated Contracting States:
AT CH DE ES FR GB GR LI NL SE

(71) Applicant: **Bassi, Adamo**
**Via canalazzo no. 179**
**I-48100 Ravenna(IT)**

Applicant: **Fermi, Paolino**
**Via canalazzo no. 179**
**I-48100 Ravenna(IT)**

(72) Inventor: **Bassi, Adamo**
**Via canalazzo no. 179**
**I-48100 Ravenna(IT)**
Inventor: **Fermi, Paolino**
**Via canalazzo no. 179**
**I-48100 Ravenna(IT)**

(74) Representative: **Coppi, Cecilia**
**Via Oblach No. 1**
**I-40141 Bologna(IT)**

(54) Implement trailer with rotating swivel wheels.

(57) Farm implement trailer with swiveling, lockable wheels with fixing pins, combined with an hydraulic system for the automatic blocking of the towing arm joint. The said system is powered by an implement lifting control which automatically sets the trailer in its transport position.

EP 0 425 452 A1

## IMPLEMENT TRAILER WITH ROTATING SWIVEL WHEELS

This invention refers to a farm implement trailer fitted with lockable swivel wheels and with an automatic tow joint blocking system hydraulically powered by the implement lifting controls.

It is well known that in agriculture, soil treatment is carried out using specific equipment and implements according to each type of crop, soil operation and soil type.

Farm implements are usually fitted to a tractor or to an implement trailer towed behind a crawler-tracked or tyred machine which has different characteristics and poses problems connected with movement and manoeuvrability.

It is in fact recognized that crawler-tracked vehicles are ill suited to the towing of wheeled trailers and usually are only used for carrying ploughs or disk harrows or similar implements, rigidly fixed to the rear end of the vehicle.

The implement trailers currently in production and use are fitted with fixed wheels and are therefore suited for use with crawler-tracked vehicles.

The purpose of this invention is to permit the construction of a trailer with rotating swivel wheels that can be locked in position with fixing pins, combined with a system for automatically blocking the towing arm joint. This makes the trailer easy to tow both on the road during transport and over terrain during work, using either a crawler-tracked or wheeled tractor.

Other aims and advantages will become apparent from the following description and from the annexed drawings which provide a schematic and representative illustration of one mode of building the invention.

The trailer is equipped with a main load-bearing arm 1, at each end of which is a sleeve housing the shaft of a fork holding the tyred wheel. The shaft rotates freely inside the sleeve and can be locked in position by means of pins introduced into the holes especially made in the sleeve, ensuring that the wheel remains rigidly straight. Located on the main support arm is the implement attachment system with the levers 3, operated by an hydraulic cylinder, used to raise and lower the implement from and to the ground.

The tow arm 4 is welded rigidly beneath the main support, in the centre and at right-angles to it so as to form a T shape. Inside this towing arm, built from tubular steel, is an hydraulic cylinder. With its longitudinal movement, through a pin projecting from a hole made in the towing arm, the cylinder operates a toggle lever 5 which opens and closes two jaws 6 arranged symmetrically in relation to the axis at the sides of the arm to which they are hinged.

At the end of the towing arm is located the eye 7 which serves to connect the trailer with a pin to the tractor.

For this purpose a "V" shaped connection box, furnished with a hole 9 to house the connecting pin fitting into the eye of the towing arm, is provided for attachment to the rear surface of the towing vehicle. The box is connected by means of through screws inserted in the holes made in the surface 10. The end section of the towing arm, including the jaws 6, is located, after connection, inside the box fixed to the tractor.

When the hydraulic cylinder is operated, the jaws open and push against the sides 11 of the box, preventing any rotation around the connection pin and thereby blocking the joint. In this way the trailer can be transported on the road by the crawler-tracked vehicle without the risk of skidding.

The control that opens the locking jaws is the same one which lifts the trailer mounted implement off the ground; thus the trailer is automatically set in its road transport position as soon as it is put out of service by disengaging the implement.

This invention, illustrated and described here by way of example, may be extended to all accessory variations which, as such, fall within its scope.

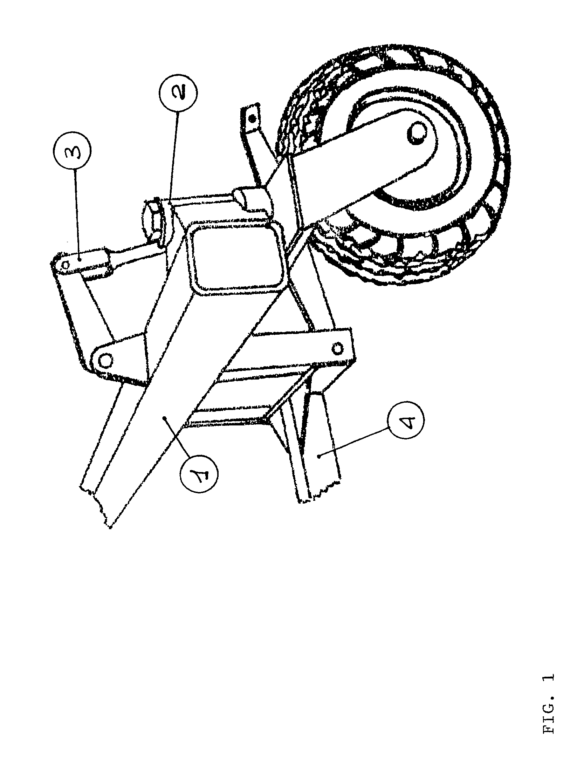

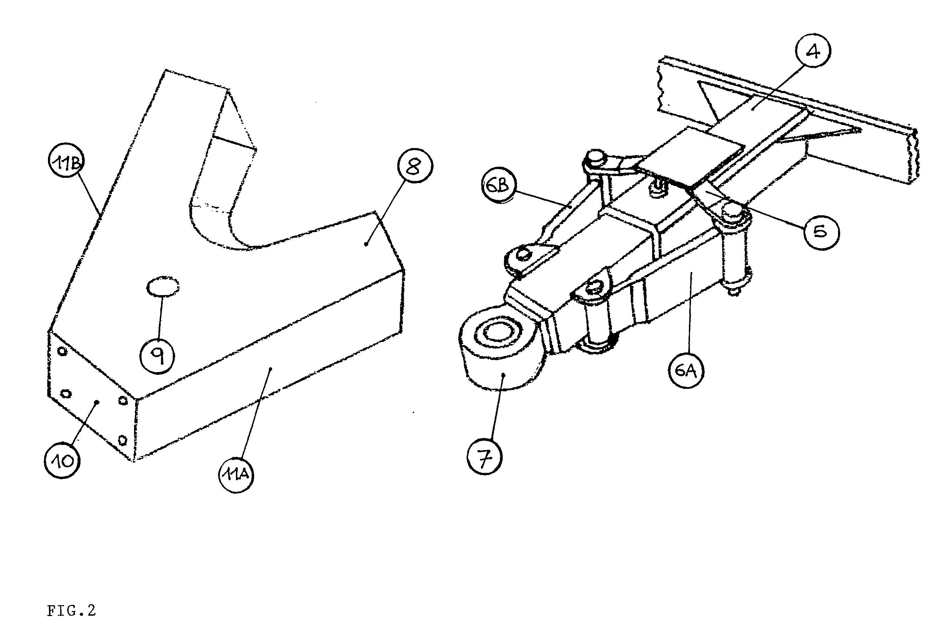

### Claims

1 - IMPLEMENT TRAILER WITH ROTATING SWIVEL WHEELS characterized by the fact that it can be towed by crawler-tracked vehicles.

2 - IMPLEMENT TRAILER, as described in claim 1, characterized by the fact that it is equipped with an hydraulic tow joint locking system, operated by the implement lifting control, which automatically sets the trailer in its road transport position, enabling the the crawler-tracked towing vehicle to be manoeuvred on the road without any skidding on the part of the trailer.

3 - IMPLEMENT TRAILER, as described in claims 1 and 2, characterized by the fact that it has swivel wheels that can be locked by means of pins so as to allow it to be towed even by a conventional wheeled vehicle.

FIG. 1

FIG. 2

European
Patent Office

EUROPEAN SEARCH
REPORT

Application Number

EP 90 83 0464

## DOCUMENTS CONSIDERED TO BE RELEVANT

| Category | Citation of document with Indication, where appropriate, of relevant passages | Relevant to claim | CLASSIFICATION OF THE APPLICATION (Int. Cl.5) |
|---|---|---|---|
| A | DE-A-3 301 460 (KÄSSBOHRER) <br> * Page 12, paragraphe 2 - page 13, paragraphe 1; figures 1-3 * <br> — — — | 1,2 | B 60 D 1/00 <br> B 62 D 13/00 |
| A | US-A-2 316 397 (BRISCOE) <br> * Figures 1-3 * <br> — — — | 1 | |
| A | GB-A-2 086 820 (PORSCHE) <br> * Abstract; figures 1-6 * <br> — — — | 2 | |
| A | DE-A-2 006 819 (WAGNER) <br> * Page 7, ligne 14 - page 8, ligne 4; figures 1,2 * <br> — — — — — | 3 | |

TECHNICAL FIELDS
SEARCHED (Int. Cl.5)

B 60 D
B 62 D
A 01 D

The present search report has been drawn up for all claims

| Place of search | Date of completion of search | Examiner |
|---|---|---|
| The Hague | 22 January 91 | BRUNELLO B. |